(19) Europäisches Patentamt
European Patent Office
Office européen des brevets

(11) Veröffentlichungsnummer: **0 431 386 B1**

(12) **EUROPÄISCHE PATENTSCHRIFT**

(45) Veröffentlichungstag der Patentschrift: **28.09.94**

(21) Anmeldenummer: **90122135.8**

(22) Anmeldetag: **20.11.90**

(51) Int. Cl.$^5$: **C08G 18/08**, C08G 18/10, C08G 18/48, C08G 18/32, C08G 18/80, C09D 175/04

# (54) Hitzehärtbare Beschichtungszusammensetzungen.

(30) Priorität: **02.12.89 DE 3939964**

(43) Veröffentlichungstag der Anmeldung:
**12.06.91 Patentblatt 91/24**

(45) Bekanntmachung des Hinweises auf die Patenterteilung:
**28.09.94 Patentblatt 94/39**

(84) Benannte Vertragsstaaten:
**AT BE CH DE ES FR GB IT LI NL**

(56) Entgegenhaltungen:
**EP-A- 0 013 890**
**EP-A- 0 052 915**
**EP-A- 0 188 766**
**EP-A- 0 206 217**
**EP-A- 0 319 816**
**EP-A- 0 324 338**
**US-A- 4 108 814**

(73) Patentinhaber: **BAYER AG**

**D-51368 Leverkusen (DE)**

(72) Erfinder: **Pedain, Josef, Dr.**
**Haferkamp 6**
**W-5000 Köln 80 (DE)**
Erfinder: **Thoma, Wilhelm, Dr.**
**Birkenweg 25**
**W-5090 Leverkusen 3 (DE)**
Erfinder: **Schröer, Walter, Dr.**
**Nicolai-Hartmann-Strasse 29**
**W-5090 Leverkusen 1 (DE)**
Erfinder: **Kling, Waldemar**
**Sperberweg 1**
**W-5067 Kürten-Bechen (DE)**
Erfinder: **Dietrich, Manfred, Dr.**
**Dresdner Strasse 16**
**W-5090 Leverkusen 1 (DE)**

EP 0 431 386 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Beschichtungszusammensetzungen auf Polyurethan-Basis, mit denen sich wasserdampfdurchlässige Beschichtungen erzeugen lassen. Es ist bekannt, derartige Beschichtungen auf physikalischem Wege herzustellen. Dabei wird das in einem Lösungsmittel gelöste Polyurethan auf ein Substrat oder einen Trennträger schichtförmig aufgebracht und im nassen Zustand in ein Bad geführt, das einen Nichtlöser für das Polymere enthält, welcher allerdings mit dem Löser mischbar ist. Der Nichtlöser dringt infolgedessen in die Lösungsschicht ein, wo er den Festkörper allmählich ausfällt, koaguliert. Bei der Trocknung des so entstandenen verfestigten Films hinterlassen der entweichende Löser wie auch der Nichtlöser Mikrokanäle, die in der Beschichtung für den Wasserdampftransport zur Verfügung stehen.

In ähnlicher Weise lassen sich nach Beimischung von Salzpulvern zur Polymerlösung Überzüge erzeugen, aus denen mit Wasser das Salz unter Hinterlassung von Mikrokavitationen ausgewaschen werden kann.

Auch die Perforation von kompakten Folien mit Hilfe energiereicher Elektronenstrahlen führt zu laminierbaren Filmen mit hoher Wasserdampfdurchlässigkeit (in der Regel ist beim wasserdampfdurchlässigen Überzug das pro Zeit- und Flächeneinheit transportierte Wasserdampfvolumen mehr als 10mal so hoch wie bei einem üblichen kompakten Film).

Diese Verfahren besitzen generell den Nachteil, daß sie chemisch kompliziert oder apparativ aufwendig sind oder aber erhebliche Abfallprobleme aufwerfen.

Neuerdings wird eine Variante der Mikroporös-Beschichtung technisch durchgeführt, die ohne die komplizierte Tauchbadtechnologie auskommt, aber im wesentlichen zu gleichen Ergebnissen führt. Bei diesem Verfahren, auch als Verdampfungskoagulation bekannt, wird die Lösung des Polymeren in einem niedrig siedenden Löser soviel Wasser zugesetzt, daß die resultierende Streichpaste gerade noch stabil und applizierbar ist. Beim Abdunsten entweicht der organische Löser zuerst; das sich immer mehr anreichernde Wasser fällt den Festkörper wie beim Tauchverfahren aus und entweicht schließlich beim Trocknen unter Hinterlassen einer mikroporösen Struktur in der Folie.

Alle diese Verfahren haben jedoch den wesentlichen Nachteil, daß Mikrokanäle oder Mikrokavitationen eine Schwächung des wasserdampfdurchlässigen Überzuges bewirken. Das heißt, daß mechanische Zugfestigkeit und Abriebbeständigkeit gegenüber einem kompakten Film deutlich abfallen.

Es hat daher von Anfang an nicht an Bemühungen gefehlt, Wasserdampfdurchlässigkeit in einem Überzug nicht nur durch physikalische Methoden sondern auch auf chemischem Wege zu erzeugen.

So ist bereits vorgeschlagen worden, solche Beschichtungen mit Polyurethanen zu erzeugen, die teilweise aus wasserlöslichen oder hydrophilen Aufbaukomponenten bestehen. In DE-A 1 220 384 und 1 226 071 werden beispielsweise Polyurethane beschrieben, die aus Glykolen, Diisocyanaten und einer difunktionellen hydrophilen Aufbaukomponente, die die Wasserdampfdurchlässigkeit der Beschichtung bewirkt und ein Makrodiol darstellt, bestehen. Es handelt sich in beiden Fällen um Polyethylenglykol mit einem Molgewicht um 1000; die beiden Anmeldungen unterscheiden sich nur hinsichtlich des "Vulkanisations"-Mechanismus, also der nachträglichen Vernetzung des Polyurethanelastomeren.

Ebenfalls wasserdampfdurchlässig sind kompakte Deckstriche auf Verbundstoffen aus textilen Substraten und mikroporösen Beschichtungen, wie sie in DE-OS 2 020 153 beschrieben werden.

Auch als Diolkomponente in Polyesterpolyolen für Polyurethanelastomere lassen sich Polyethylenglykole verwenden, um, wie die japanische Patentanmeldung 61/009 423 beansprucht, gut wasserdampfdurchlässige Beschichtungen mit vernachlässigbarer Wasserquellung zu erzeugen.

Segmentierte Polyurethanelastomere aus Polyethylenglykolen sind auch aus EP-A 52 915 bekannt.

Auch andere organische hydrophile Komponenten werden Polyurethanen zugesetzt, um wasserdampfdurchlässige Beschichtungen und Verbundmaterialien herzustellen; insbesondere Poly-$\gamma$-methylglutamat kann Polyurethanen zugesetzt, in ihnen als Aufbaukomponente verwendet, oder ihnen aufgepfropft werden. Aus der Vielzahl der diese Anwendung beschreibenden Literaturstellen seien DE-A 1 922 329 und 1 949 060 sowie die JP-A 58 057 420 und 59/036 781 genannt.

Von besonderem technischen Interesse für das Gebiet der wasserdampfdurchlässigen kompakten Beschichtungsmittel sind in jüngster Zeit hauptsächlich Polyurethane, die als Aufbaukomponenten die oben erwähnten Polyethylenglykole enthalten; diese Rohstoffe sind preisgünstig, allgemein verfügbar und technisch gut zugänglich. Auch die daraus erhältlichen Polyurethane und Polyurethanhanstoffe sind im Prinzip gut bekannt. Im Gegensatz zu den weit verbreiteten Polyurethan-harnstoffen, die als Makrodiole Polyester, Polycarbonate oder Polyether enthalten, sind diese wasseraufnahmefähig, permeabel für Wasserdampf, gelegentlich sogar im Wasser stark quellbar oder löslich.

Aus diesem Grunde werden den die Hydrophile verursachenden Polyethylenglykolen hydrophobe Polyole beigemischt; aus diesen Gemischen lassen sich Polyurethane bzw. Polyurethanharnstoffe herstellen, die gute Wasserdampfdurchlässigkeit mit guter Resistenz gegen die Einflüsse flüssigen Wassers verbinden.

In DE-A 2 702 090 bzw. US-A 4 248 756 werden Zweikomponentenbeschichtungssysteme aus Ketoxim-blockierten Prepolymeren und zweikernigen, cycloaliphatischen Diaminen als Vernetzer/Härter, mit höchstem 15 Gew.-% Lösemittel in der Zubereitung beschrieben. Dabei können die Polyhdroxyverbindungen in den blockierten Prepolymeren, z.B. Polypropylenoxide, gegebenenfalls auch Ethylenoxideinheiten enthalten.

Blockierte Prepolymere, wie sie in EP-A 100 005 beschrieben werden, aus Polyhydroxyverbindungen, die 20-100 Gew.-%, bevorzugt 40-80 Gew.-% EOx-Einheiten enthalten, liefern nach Applikation und Härtung auf textilen Substraten gut wasserdampfdurchlässige Beschichtungen.

Die Quellung dieser Schichten in Wasser führt jedoch dazu, daß beim Auflegen diskreter Wassertropfen auf der Schicht pustelartige Quellerscheinungen auftreten. Diese sind für einen textilen Gebrauchsartikel nicht nur eine ästhetische Störung, sondern ein wesentlicher technischer Mangel.

Gegenstand der vorliegenden Erfindung sind hitzehärtbare Beschichtungszusammensetzungen enthaltend

A) ein durchschnittlich 2-4 Ketoximblockierte NCO-Gruppen aufweisendes Prepolymer mit einem durchschnittlichen Molekulargewicht von 500-15 000 auf Basis aliphatischer, cycloaliphatischer und aromatischer Polyisocyanate und einer oder mehreren Polyhydroxykomponenten mit 2 bis 4 Hydroxylgruppen, die 40 bis 100 Gew.-% Polyether und in der Summe 0-30 Gew.-%, bevorzugt 5-20 Gew.-% Ethylenoxid-Anteil enthalten, wobei bei Verwendung von mehreren Polyhydroxykomponenten der Ethylenoxid-Anteil in einer der Komponenten bis zu 70 Gew.-% betragen kann, und

B) einen Vernetzer der Formel

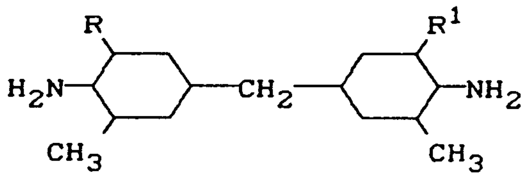

in der R oder $R^1$ H oder $C_1$-$C_4$-Alkyl bezeichnet, wobei das Äquivalentverhältnis von blockierten NCO-Gruppen in A) zu $NH_2$-Gruppen in B) zwischen 1,35:1 und 0,95:1 liegt,

dadurch gekennzeichnet, daß mindestens eine der für die Herstellung des Prepolymers verwendeten Polyhydroxyverbindungen in stabiler Dispersion ein Polyurethan und/oder einen Polyurethanharnstoff und/oder einen Polyharnstoff enthält, die keine freien NCO-Gruppen oder Hydroxylgruppen oder Aminogruppen mehr enthalten und aus aromatischen und/oder aliphatischen und/oder cycloaliphatischen Diisocyanaten, aliphatischen und/oder cycloaliphatischen Diaminen und/oder Diaminopolyethern (Molekulargewicht 500 bis 3000) und/oder Hydrazinhydrat und/oder Hydraziden und Dihydroxycarbonsäuren, Glykolen, Dihydroxypolyethern (Molekulargewicht 500 bis 3000) aufgebaut sind, und die mindestens 5 Mol% Dihydroxycarbonsäuren und/oder Diaminoalkylsulfonsäuren und/oder Diaminocarbonsäuren und/oder deren Salze enthalten.

Die Vorteile der erfindungsgemäßen hitzehärtbaren Zusammensetzungen sind folgende:

1. Hoher Feststoffgehalt der Streichpasten, also relativ geringer Lösemittelgehalt von 0-30 Gew.-%.
2. Lange Topfzeit der Streichpasten, mehr als 14 Tage, nach Zusatz des Vernetzers.
3. Beschichtungen mit hoher Feststoffauflage pro Fläche, z.B. 50-150 $g/m^2$ sind herstellbar.
4. Hohe Wasserdampfdurchlässigkeit, z.B. 2-8 $g/cm^2h$ nach IUP15, bei gleichzeitig hoher Feststoffauflage, 3000-5000 $g/m^2d$, gemessen mit Lyssy-Gerät L 80/4000 bei 35 °C und einer Differenz der rel. Feuchte von 65 %.
5. Hohe Wasserdichte der Beschichtungsartikel am Original, nach Waschen und/oder Chemischreinigung.
6. Hervorragende "Tropfenfestigkeit" d.h. beim Auflegen von Wassertropfen auf die PUR-Schicht tritt keine "pustelartige" Quellung auf.
7. Geringer Abrieb der kompakten Beschichtungsoberfläche.
8. Wegfall umweltbelastender Fällbadflüssigkeiten wie etwa bei der Koagulation von DMF-Lösungen in Wasser.
9. Normale Streich-, Rakel- und Trockentechnik im Gegensatz zu den diffizilen Streich- und Trockenbedingungen bei der Herstellung wasserdampfdurchlässiger, mikroporöser Schichten nach dem Verfahren

der Verdampfungskoagulation.

Für den Aufbau der Ketoxim-blockierten NCO-Prepolymerisate (A) kommen aromatische und aliphatische Diisocyanate, wie sie eingehend in den US-A 2 457 387 beschrieben sind, in Frage. Bevorzugt sind 2,4'- bzw. 4,4'-Diisocyanatodiphenylmethan, cyanato-diphenylmethan, die isomeren Toluylendiisocyanate sowie insbesondere Gemische dieser Diisocyanate. Als aliphatisches Diisocyanat wird bevorzugt 4,4'-Diisocyanato-dicyclohexylmethanoder Isophorondiisocyanat verwendet.

Die Reaktionspartner für die Diisocyanate sind z.B. beschrieben in DE-A 2 550 796, US 4 147 680 und DE-A 2 513 815. Sie enthalten als stabile Dispersion ein Polyurethan und/oder einen Polyurethanharnstoff und/oder einen Polyharnstoff mit hydrophil machenden Gruppen.

Als Grundlage für diese Dispersionen dienen Polyhydroxykomponenten, die in der Summe vorzugsweise 5-20 Gew.-% EO-Anteil enthalten, wobei in der einzelnen Polyhydroxykomponente bis zu 70 Gew.-%, bevorzugt bis zu 50 Gew.-% Ethylenoxid-Anteil enthalten sein kann, z.B. Polyhydroxyverbindungen, die ein Molekulargewicht von 500-10.000, vorzugsweise 1000-6000 haben und wie sie im Detail ebenfalls in den oben genannten Publikationen beschrieben werden.

Bevorzugt entstammen die Polyhydroxykomponenten den folgenden Klassen: 2-3 Hydroxylgruppen aufweisende Polyether wie Propylenoxid-Polyether und Ethylenoxid-Polyether sowie Propylenoxid/Ethylenoxid-Mischpolyether oder Mischungen aus Polypropylenoxid und Polyethylenoxid; 2-3 Hydroxylgruppen aufweisende Polyester, vorzugsweise mit einem mittleren Molekulargewicht von 1000-6000; Gemische aus Polyhydroxypolyethern, z.B. den obengenannten, und Polyhydroxypolyestern, z.B. Hydroxypolyester aus Adipinsäure, Hexandiol-1,6 und Neopentylglykol vom mittleren Molekulargewicht 1000-3000 oder Hydroxypolycarbonate aus Hexandiol, Hydroxyethoxyhexanol, Hydroxypolycaprolacton und Diphenylcarbonat.

Der Polyetheranteil in den Polyhydroxykomponenten beträgt bevorzugt 70-100 Gew.-%.

Die erfindungsgemäß einzusetzenden dispergierten Polyurethane, Polyharnstoffe bzw. Polyurethanharnstoffe C werden bevorzugt in den Polyhydroxyverbindungen und deren Gemischen in situ erzeugt. Es ist auch möglich diese Polymeren extern zu erzeugen und den Polyhydroxyverbindungen zuzumischen.

Bevorzugt ist die Herstellung der Polyurethane, Polyharnstoffe bzw. insbesondere Polyurethanharnstoffe C in situ in den Polyhydroxyverbindungen.

Als Ausgangsrohstoffe für die in situ in den Polyhydroxyverbindungen erzeugten Polyurethanharnstoffe eignen sich u.a.:
Isomerengemische von Toluylendiisocyanat oder Diphenylmethandiisocyanat, Hexandiisocyanat, Isophorondiisocyanat, bevorzugt das Gemisch 2,4/2,6-Toluylendiisocyanat 80:20, Isophorondiamin, 4,4'-Diaminodicyclohexylmethan, 4,4'-Diamino-3,3'-dimethyl-dicyclohexylmethan, $\omega,\omega$-Diamino-polyethylenoxid, Carbo-dihydrazid, Semicarbazid-propionsäurehydrazid, bevorzugt Hydrazinhydrat, Ethylenglykol, Diethylenglykol, Propylenglykol-1,3 oder -1,2, Butandiol, Hexandiol-1,6, Neopentylglykol, Dimethylolpropionsäure, Ethylendiamin-$\beta$-ethyl-sulfonsäure, Ethylendiamin-propyl- oder -butylsulfonsäure, 1,2- oder 1,3-Propylendiamin-$\beta$-ethylsulfonsäure, Glutaminsäure, Lysin, 3,5-Diaminobenzoesäure und deren Alkali und/oder Ammoniumsalze.

Bei der Herstellung der NCO-Prepolymerisate können gegebenenfalls auch niedermolekulare Diole mit einem Molekulargewicht von weniger als etwa 300 mitverwendet werden, wie sie als Kettenverlängerungsmittel an sich bekannt sind. Bevorzugt sind in diesem Zusammenhang Butandiol-1,4 und Hexandiol-1,6.

Die Herstellung der NCO-Prepolymerisate erfolgt in an sich bekannter Weise, indem man die genannten Polyhydroxylverbindungen die bereits dispergiert ein Polyurethan, einen Polyurethanharnstoff oder einen Polyharnstoff enthalten und denen gegebenenfalls ein niedermolekulares Diol zugemischt ist mit überschüssigem Diisocyanat, vorzugsweise bei ca. 70-110 °C umsetzt. Man wählt hierbei im allgemeinen ein NCO/OH-Verhältnis von 1,5:1 bis 6,0:1, vorzugsweise von 1,7:1 bis 2,5:1.

Als Blockierungsmittel für die NCO-Prepolymerisate kommen z.B. Ketoxime aus Hydroxylamin und Ketonen wie Aceton, Methylethylketon, Diethylketon, Cyclohexanon, Acetophenon und Benzophenon in Frage.

Bevorzugtes Blockierungsmittel ist Methylethylketoxim (Butanonoxim). Die Blockierungsreaktion wird z.B. in der Weise durchgeführt, daß man das NCO-Prepolymerisat bevorzugt mit stöchiometrischen Mengen an Ketoxim bei erhöhter Temperatur, z.B. 70-100 °C, bis zum Verschwinden der NCO-Gruppen umsetzt.

Als Vernetzerkomponente B) für die blockierten NCO-Prepolymerisate dient vorzugsweise 4,4'-Diamino-3,3'-dimethyl-dicyclohexylmethan, ein bei Raumtemperatur flüssiges, aliphatisches Diamin mit sehr geringem Dampfdruck.

Bei den erfindungsgemäßen Beschichtungszusammensetzungen beträgt das Äquivlentverhältnis von blockierten NCO-Gruppen in A) zu $NH_2$-Gruppen in B) vorzugsweise 1,25:1 bis 1:1.

Die erfindungsgemäßen Zusammensetzungen finden insbesondere zur Beschichtung von textilen Flächengebilden und Leder Verwendung. Von besonderem Vorteil ist, daß mit ihrer Hilfe wasserdampfdurchlässige Beschichtungen erzeugt werden können Die Erfindung betrifft dementsprechend weiterhin ein Verfahren zur Beschichtung, insbesondere wasserdampfdurchlässigen Beschichtung, von Substraten, vorzugsweise textilen Flächengebilden und Leder, das dadurch gekennzeichnet ist, daß man die erfindungsgemäßen Zusammensetzungen verwendet.

Mit den hitzehärtbaren Reaktivgemischen können(wasserdampfdurchlässige) Beschichtungen auf den in der Praxis üblichen Beschichtungsanlagen sowohl nach dem Direkt- als auch nach dem Umkehrbeschichtungsverfahren hergestellt werden. Hierbei ist es möglich, in Abhängigkeit von dem jeweiligen spezifischen chemischen Aufbau des NCO-Prepolymerisates, eigenschaftsmäßig verschiedene Schichten wie z.B. Haft-, Zwischen- oder Deckschichten, zu erzeugen.

Zur Herstellung einer Umkehrbeschichtung aus den erfindungsgemäßen Produkten trägt man z.B. zuerst auf einen geeigneten Zwischenträger, z.B. ein Trennpapier, das Reaktivgemisch für den Deckstrich in einer Menge von ca. 30-100 $g/m^2$ auf, härtet im Trockenkanal aus, bringt auf den trockenen Deckstrich das Reaktivgemisch für den Haftstrich ebenfalls in einer Menge von ca. 30-100 $g/m^2$ auf, kaschiert das Substrat hinzu, härtet die Beschichtung in einem weiteren Trockenkanal bei ca. 120-190 °C, vorzugsweise 150-160 °C, aus und zieht das beschichtete Substrat vom Trennträger ab. Selbstverständlich ist es aber auch möglich, nur den Deck- oder den Haftstrich aus den erfindungsgemäßen Beschichtungsmassen zu erzeugen und für den anderen Strich ein konventionelles Beschichtungssystem oder ein andersartiges wasserdampfdurchlässiges Beschichtungssystem einzusetzen.

Wie schon erwähnt, können die Reaktivgemische auch im Direktstreichverfahren unmittelbar auf das textile Substrat aufgebracht werden.

Die erfindungsgemäßen Beschichtungszusammensetzungen können auch mit 1- oder 2-Komponenten-PUR in Lösung oder Dispersion (s. z.B. DE-A 2 457 387 und DE-A 3 134 161) verschnitten werden. Die hierzu verwendeten PUR können hydrophob oder hydrohpil sein.

Werden aus den erfindungsgemäßen Beschichtungsmassen Zwischenschichten hergestellt, dann setzt man ihnen gegebenenfalls beim Erhitzen Gase abspaltende Verbindungen als Treibmittel sowie zweckmäßigerweise auch Schaumstabilisatoren zu. Geeignete Zusätze werden z.B. in DE-A 1 794 006 (GB-A 1 211 339) sowie in US-A 3 262 805 beschrieben.

Beispiel 1

a) Herstellung der hydrophilen Polyharnstoff-Dispersion in einem Polyether

In zwei hintereinander geschaltete Stachelrührer (Kammervolumen 1,5 l bzw. 0,5 l, Drehzahl 1500 U/min) werden kontinuierlich bei Raumtemperatur pro Minute 1000 g eines Polyethers aus Trimethylolpropan, Propylenoxid und Ethylenoxid (Gewichtsverhältnis 82:18, OHZ: 35), 104 g einer Mischung aus 80 %. 2,4- und 20 %, 2,6-Toluylendiisocyanat und eine Mischung aus 50 g Hydrazinhydrat und 114 g Ethylendiamin-$\beta$-ethylsulfonsaures Natrium (70 %ige wäßrige Lösung) eingeführt. Die drei Komponenten gelangen getrennt voneinander unmittelbar in die Mischzone des 1. Stachelrührers. Dabei wird der Polyether aus dem Vorratskessel über eine Zahnradpumpe gefördert, während die beiden dünnflüssigen Komponenten aus getrennten Vorratsgefäßen über Kolbendosierpumpen gefördert werden. In den Stachelrührern erfolgt unter exothermer Reaktion die Polyaddition. Durch Kühlung der Stachelrührer wird die Reaktionstemperatur auf 100-105 °C eingestellt. Nach einer Verweilzeit von ca. 2 Minuten verläßt eine praktisch vollständig abreagierte weiße Dispersion den 2. Stachelrührer. Die Dispersion wird in ein Verweilzeitgefäß überführt, wo sie unter Rühren auf 80-100 °C gehalten wird. Nach dem Nachrühren wird dann das vom Hydrazinhydrat und dem Diamin herrührende Wasser bei 100 °C im Vakuum abdestilliert. Man erhält eine stabile, weiße, feinteilige, etwa 20 %ige Dispersion mit einer OH-Zahl von 27,2, einer Viskosität von 1600 mPas/25 °C und einem pH-Wert von 8,0.

b) Herstellung des blockierten High-Solid-Prepolymeren mit hyrophilem Polyharnstoff

1000 g der unter a) beschriebenen Polyharnstoff-Dispersion werden vorgelegt. Man fügt 65 g eines Polyethers aus Bisphenol A und Propylenoxid, OHZ 220, hinzu und läßt mit einem Gemisch aus 91 g 4,4'-Diphenylmethandiisocyanat und 63 g 2,6-Toluylendiisocyanat bei 80 °C zu einem NCO-Prepolymer reagieren (3 Std). Nach Verdünnen mit 143 g Methoxypropylacetat werden mit 69 g Butanonoxim die NCO-Gruppen bei 80 °C umgesetzt, d.h. blockiert; blockierter NCO-Gehalt: 2,1 %.

c) Bereitung der Streichpaste

1000 g des unter b) beschriebenen 90 %igen High-Solid-Prepolymeren werden mit 90 g Titandioxid, 20 g Aerosil 200 und 100 g einer aromatischen Kohlenwasserstoff-Mischung, z.B. Solvesso® 100, vermischt und abgemahlen. Hierzu fügt man als Vernetzer 59 g 4,4-Diamino-dimethyl-dicyclohexylmethan. Die Streichpaste hat eine Viskosität von ca. 30 000 mPas/25 °C.

d) Herstellung eines Beschichtungsartikels im Transferverfahren

Auf ein handelsübliches mattes Trennpapier wird die Streichpaste nach c) gerakelt, Rakelspalt < 0,08 mm, Trocknung und Vernetzung bei 140-160 °C.

Auf diesen Deckstrich rakelt man eine Haftstrichpaste, Spalt < 0,1 mm, aus 1000 g der in DE-A 3 736 652 Beispiel 3 beschriebenen 50 %igen Haftstrichlösung, der man zur Vernetzung 40 g eines Vernetzers auf Basis eines Hexamethoxy/butoxy-melaminharzes, 70 %ig in i-Butanol und 10 g einer 20 %ige Lösung von p-Toluolsulfonsäure in i-Propanol als Katalysator zusetzt. Ein Baumwollgewebe von 160 $g/m^2$ wird zukaschiert. Die Vernetzung des Haftstrichs erfolgt bei 140 °C. Die gesamte Beschichtungsauflage beträgt ca. 60 $g/m^2$ Feststoff.

Der weiche, voluminöse, wasserdampfdurchlässige Artikel hat folgende Echtheiten:

| | |
|---|---|
| WDD-Lyssy*: | 4000 $g/m^2$ d |
| Wassersäule: | |
| Original | 2000 mm |
| 3 x Wäsche | 2000 mm |
| 3 x Chem. Reinigung | 2000 mm |

* (WDD = Wasserdampfdurchlässigkeit)

Bally-Flexometer:

| | |
|---|---|
| Bally-Flexometer: | |
| RT | 200 000 Knickungen |
| -10° C | 50 000 " |

Tropfentest:

Bei der Einwirkung von Wassertropfen auf die Beschichtungsoberseite, 1-5 min, beobachtet man keine pustelartige Veränderung der Oberfläche.

Vergleichsbeispiel zu 1)

V(a) Blockiertes High-Solid-Prepolymer ohne hydrophilen Polyharnstoff

800 g des unter a) genannten trifunktionellen Polyethers aus Trimethylolpropan, Propylenoxid und Ethylenoxid im Verhältnis 82:18 werden vorgelegt und mit 60 g eines Polyethers aus Bisphenol A und Propylenoxid, OHZ 220, vermischt. Die Polyhydroxyverbindungen werden dann mit einem Gemisch von 91 g 4,4'-Diphenylmethandiisocyanat und 63 g 2,6-Toluylendiisocyanat wie unter b) zu einem NCO-Prepolymer umgesetzt und schließlich bei 80 °C nach Verdünnung mit 120 g Methoxypropylacetat mit 69 g Butanonoxim blockiert.

V/b) Bereitung der Streichpaste

1000 g des unter V/a) beschriebenen 90 %igen High-Solid-Prepolymeren werden wie oben angegebenen pigmentiert, gefüllt, verdünnt und abgemahlen. Man fügt als Vernetzer 70 g 4,4'-Diamino-dimethyldicyclohexylmethan hinzu. Die Streichpaste hat eine Viskosität von ca. 27 000 mPas/25 °C.

V/c) Herstellung eines Beschichtungsartikels im Transferverfahren

In Analogie zu 1/d) wird ein Beschichtungsartikel unter Verwendung der Streichpaste V/b) als Deckstrich hergestellt. Die Wasserdampfdurchlässigkeit des Vergleichsartikels liegt unterhalb des technisch interessanten Gebiets, 1800 g/$m^2$ d nach Lyssy.

Die Dichtigkeit, gemessen als Wassersäule ist natürlich hoch, 2000 mm.

Beispiel 2

a) Herstellung der hydrophilen Polyharnstoff-Dispersion in einem Polyether

Wie in Beispiel 1a beschrieben stellt man eine Dispersion eines Polyharnstoffs in einem Polyether her aus 1000 g eines Polyethers (aus Glycerin und Propylenoxid, OHZ 37) auf 81 g Hydrazinhydrat, 197 g Ethylendiamin-$\beta$-ethylsulfonsaurem Natrium und 180 g Toluylendiisocyanat (2,4/2,6 = 80:20). Man erhält eine ca. 30 %ige Dispersion mit der OH-Zahl 26.

b) Herstellung des blockierten High-Solid-Prepolymeren mit hydrophilem Polyharnstoff

1000 g der unter 2/a) beschriebenen Polyharnstoff-Dispersion werden vorgelegt. Man fügt 53 g Polyether aus Bisphenol A und Propylenoxid, OHZ 220, hinzu, läßt mit einem Gemisch aus 80 g 4,4'Diphenylmethandiisocyanat und 55 g 2,6-Toluylendiisocyanat bei 100 °C zum NCO-Prepolymer reagieren, verdünnt mit 140 g Solvesso 100 und blockiert die NCO-Gruppen mit 60 g Butanonoxim bei 80 °C; NCO-Gehalt: 2,3 %.

c) Bereitung der Streichpaste (Deckstrich)

1000 g des unter 2/b) beschriebenen 90 %igen High-Solid-Prepolymeren werden wie in 1/c) pigmentiert, gefüllt, verdünnt und abgemahlen. Als Vernetzer fügt man 65 g 4,4'-Diaminodicyclohexylmethan hinzu. Die Streichviskosität der Paste beträgt ca. 25 000 mPas/25 °C.

d) Herstellung der Haftstrichpaste

500 g Dihydroxypolycarbonat mit OHZ 56, hergestellt durch Umsetzung von $\omega$-Hydroxy-capronsäure-$\omega$'-hydroxy-hexylester mit Diphenylcarbonat, 500 g Dihydroxypolyether aus molaren Mengen Ethylenoxid und Propylenoxid = 1:1 OHZ 56, 18 g Butandiol, 23,6 g Hexandiol werden in 965 g Toluol mit 244 g Toluylendiisocyanat-2,4/2,6 = 65:35 bei 90-100 °C umgesetzt, nach Verdünnen mit 320 g Methylethylketon wird die Reaktion mit 5 g Butanonoxim abgestoppt. Viskosität der Lösung bei 25 °C: 32 000 mPas.

1000 g dieser 50 %igen Lösung werden mit 40 g eines Vernetzers wie in 1/d) und 10 g eines Katalysators wie in 1/d) versetzt.

e) Herstellung eines Beschichtungsartikels im Transferverfahren analog 1/d)

Deckstrich aus 2/c), Haftstrich aus 2/d). Echtheiten des weichen, voluminösen, wasserdampfdurchlässigen Artikels:

| | |
|---|---|
| WDD-Lyssy | 3000 g/m² d |
| Wassersäule: | |
| Original | 2000 mm |
| 3 x Wäsche | 2000 mm |
| 3 x Chem. Reinigung | 2000 mm |

Der Artikel ist tropfenfest, d.h. bei Einwirkung von Wassertropfen analog Beispiel 1 treten keine pustelartigen Veränderungen der Oberfläche auf.

Beispiel 3

a) Herstellung der hydrophilen Polyharnstoff-Dispersion in einem Polyether

Aus 1000 g des in 2/a) beschriebenen Polyethers, einem Diamingemisch bestehend aus 15 g Hydrazinhydrat, 59 g Ethylendiamin-$\beta$-ethylsulfonsaurem Natrium und 56 g eines linearen, primäre Aminoendgruppen enthaltenden Ethylenoxidpolyethers mit einem mittleren Molgewicht von 2000 sowie 124 g Isophorondiisocyanat stellt man sich wie in 1a beschrieben eine feinteilige, nach Entfernung des Wassers ca. 20 %ige Dispersion mit der Hydroxylzahl 29 her.

b) Herstellung des blockierten High-Solid-Prepolymeren mit hydrophilem Polyharnstoff

1000 g der unter 3/a) beschriebenen Polyharnstoff-Dispersion werden vorgelegt. In Analogie zu 2/b) erfolgt mit den gleichen Komponenten im gleichen Gewichtsverhältnis die Herstellung des blockierten NCO-Prepolymeren; NCO-Gehalt: 2,1 % (blockiert).

c) Bereitung der Streichpaste (Deckstrich)

1000 g des unter 3/b) beschriebenen 90 %igen High-Solid-Prepolymeren werden in wie in 1/c) pigmentiert, gefüllt, verdünnt und abgemahlen. Als Vernetzer fügt man 59 g 4,4'-Diamino-dimethyl-dicyclohexylmethan hinzu. Fließviskosität der Dispersion ca. 32 000 mPas.

d) Herstellung der Haftstrichpaste

700 g Hexandiolpolyadipat (OHZ 133) und 300 g Ethylenglykolpolyether (OHZ 56) werden in Gegenwart von Toluol mit 174 g Toluylendiisocyanat-2,4/2,6 bei 100 °C umgesetzt. Die erhaltene Lösung wird auf einer Ausdampfschnecke vom Lösungsmittel befreit. Die PUR-Schmelze wird nach Extrusion und Abkühlung granuliert.

300 g dieses Granulats werden in 700 g Ethylacetat gelöst; Viskosität 35 000 mPas/25 °C. Zur Vernetzung fügt man 50 g einer 75 %igen Lösung in Ethylacetat eines Polyisocyanats auf Basis Toluylendiisocyanat mit einem NCO-Gehalt von 13% hinzu; ferner zur Katalyse der Vernetzungsreaktion 50g einer 10%igen Lösung aus tertiärem Aminourethan (hergestellt aus N-Methyldiethanolamin und Phenylisocyanat) in Toluol/Methylethylketon = 1:1

e) Herstellung eines Beschichtungsartikels im Transferverfahren

1) auf Textil analog 1/d aus Deckstrichpaste 3/c) und Haftstrichpaste 3/d)

| | |
|---|---|
| WDD-Lyssy | 3500 $g/m^2$ d |
| Wassersäule | |
| Original | 2000 mm |
| 3 x Wäsche | 2000 mm |
| 3 x Chem. Reinigung | 1800 mm |

Der Artikel ist tropfenfest in Analogie zu Beispiel 1.

2) auf Spaltleder aus Deckstrich 3/c) und Haftstrich 3/d)

In den noch lösungsmittelnaßen Haftstrich (3/d) wird Spaltleder eingelegt, ausgepreßt, das Lösungsmittel bei 80-90 °C verdampft. Nach 2-tägiger Lagerung bei RT hat das beschichtete Spaltleder eine Wasserdampfdurchlässigkeit nach IUP 15 von 2 $g/cm^2$ h.

Vergleichsbeispiel zu 3)

V/a) Blockiertes High-Solid-Prepolymer ohne hydrophilen Polyharnstoff

800 g des unter 2a) genannten Polyethers der OHZ 37 werden vorgelegt und mit 53 g Polyether aus Bisphenol A und Propylenoxid der OHZ 220, vermischt und dann mit 80 g 4,4'-Diphenylmethandiisocyanat und 59 g 2,6-Toluylendiisocyanat bei 100 °C umgesetzt. Das NCO-Prepolymer wird nach Verdünnung mit Solvesso 100 auf 90 %. mit Butanonoxim blockiert; block. NCO-Gehalt: 2,5 %.

V/b) Bereitung der Streichpaste

1000 g des Prepolymeren V/a) werden nach Pigmentierung wie in V/b-1) mit 70 g 4,4'-Diaminodimethyldicyclohexylmethan versetzt. Viskosität der Streichpaste: 25 000 mPas/25 °C.

V/c) Herstellung der Beschichtungsartikel im Transferverfahren auf

1. Textil
2. Spaltleder

gemäß e/3) aus Deckstrich V/b) und Haftstrich 3/d)

| | |
|---|---|
| WDD/Lyssy für Textil: | 1600 $g/m^2$ d |
| WDD/IUP 15 für Leder: | 0,1 $g/cm^2$ h |

Beispiel 4

a) Herstellung der hydrophilen Polyharnstoff-Dispersion in einem Polyether

In 1000 g des in 1/a) beschriebenen trifunktionellen Polyethers wird aus 24 g Hydrazinhydrat und 8,1 g Natriumglutaminat in 12 g Wasser mit 87,7 g Toluylendiisocyanat-2,4/2,6 = 80:20 in situ der hydrophile Polyharnstoff erzeugt und das Wasser im Vakuum entfernt.

b) Herstellung des blockierten High-Solid-Prepolymeren, hydrophilen Polyharnstoff enthaltend

800 g der unter 4/a) beschriebenen Polyharnstoff-Dispersion werden vorgelegt und mit 36,1 g eines Polyethers aus Bisphenol A und Propylenoxid, OHZ 220, vermischt. Bei 100 °C setzt man die Polyhydroxyverbindungen mit einem Gemisch aus 38,1 g 2,4/2,6-Toluylendiisocyanat (80:20) und 54,7 g 4,4'-Diphenylmethandiisocyanat zum NCO-Prepolymeren um. Dieses wird nach Verdünnen mit 108 g Methoxypropylacetat bei 80 °C mit 41,9 g Butanonoxim blockiert; NCO-Gehalt: 1,2 % (blockiert).

c) Bereitung der Streichpaste

1000 g des unter 4/b) beschriebenen 90 %igen High-Solid-Prepolymeren werden wie in 1/c) pigmentiert. Zur Vernetzung fügt man 34 g 4,4-Diamino-dimethyldicyclohexylmethan hinzu. Die Streichpaste hat eine Viskosität von 32 000 mPas/25 °C.

d) Herstellung eines Beschichtungsartikels im Transferverfahren

Analog 1/d) wird mit der Deckstrichpaste 4/c) und dem in 1/d) beschriebenen Haftstrich ein Transferartikel hergestellt. Der weiche, wasserdampfdurchlässige Artikel von angenehmem Griff hat folgende Echtheiten:

| | |
|---|---|
| WDD-Lyssy | 4500 $g/m^2$ d |
| Wassersäule: | |
| Original | 2000 mm |
| 3 x Wäsche | 2000 mm |
| 3 x Chem. Reinigung | 2000 mm |
| Bally-Flexometer | |
| RT | 200 000 Knickungen |
| -10° C | 50 000 " |

Bei der Einwirkung von Wassertropfen auf die Beschichtungsoberfläche beobachtet man keine Veränderungen.

Beispiel 5

a) Herstellung der hydrophilen Polyurethan-Dispersion in einem Polyether

Eine 20 %ige Polyharnstoffdispersion wird hergestellt wie in Beispiel 1a beschrieben aus 1000 g des in 2a erwähnten trifunktionellen Polyethers, 33,8 g Hydrazinhydrat und einem Vorpolymerisat aus 152,8 g Toluylendiisocyanat (2,4:2,6 = 80:20) und 70,3 g eines linearen Mischpolyethers aus Ethylenoxid/Propylenoxid im Gewichtsverhältnis 1:1 mit der OHZ 56.

b) Herstellung des blockierten High-Solid-Prepolymeren, enthaltend hydrophiles Polyurethan

6253 g der unter 5/a) hergestellten Polyharnstoff-Dispersion im Polyether werden vorgelegt. Nach Zugabe von 621 g Polyether aus Bisphenol A und Propylenoxid, OHZ 220, setzt man mit einem Gemisch aus 940 g 4,4'-Diphenylmethandiisocyanat und 650 g Toluylendiisocyanat-2,4/2,6 (80:20) bei 100 °C um. Nach Verdünnung mit 1020 g Methoxypropylacetat werden die NCO-Gruppen mit 720 g Butanonoxim blockiert; blockierter NCO-Gehalt: 2,9 %, Viskosität: 50 000 mPas/25 °C.

c) Bereitung der Streichpaste

1000 g des unter 5/b) beschriebenen 90 %igen, blockierten NCO-Prepolymeren werden wie in 1/c) pigmentiert, gefüllt, verdünnt und abgemahlen. Als Vernetzer fügt man 82 g 4,4'-Diamino-dimethyldicyclohexylmethan hinzu.

d) Herstellung einer WDD-Folie

Auf ein handelsübliches glattes, mattes Trennpapier wird die Streichpaste nach c) mit einem Rakelspalt von 0,1 mm aufgerakelt.
Verdampfung des Lösungsmittel und Vernetzung erfolgen bei 100-120 bis 150-160 °C.
Die WDD-Folie mit einem Gewicht von 70 g/m$^2$ hat eine WDD nach Lyssy von 3300 g/m$^2$ d.

Beispiel 6

a) Herstellung der hydrophilen Polyurethan-harnstoff-Dispersion in einem Polyether

1000 g des in 2/a) beschriebenen trifunktionellen Polyethers werden vorgelegt. 429,2 g eines Polyurethanharnstoffs aus 61,4 g Hydrazinhydrat, 72,9 g N-Methyldiethanolamin und 317,1 g Toluylendiisocyanat-2,4/2,6 (80:20) werden im Polyether fein dispergiert; OHZ ca. 40.

b) Herstellung des blockierten High-Solid-Prepolymeren

715 g der unter 6/a) hergestellten Polyurethan-harnstoff-Dispersion in Polyether werden mit 69 g Polyether aus Bisphenol A und Propylenoxid, OHZ 220, vermischt und mit einem Gemisch aus 94 g 4,4'-Diphenylmethandiisocyanat und 65 g Toluylendiisocyanat-2,4/2,6 (80:20) bei 100 °C umgesetzt. Nach Verdünnung mit 112 g Methoxypropylacetat werden die NCO-Gruppen mit 65 g Butanonoxim blockiert; blockierter NCO-Gehalt: 2,8 %, Viskosität: 40 000 mPas/25 °C.

c) Bereitung der Streichpaste

1000 g des unter 6/b) beschriebenen 90 %igen Prepolymer werden wie in 1/c) pigmentiert, verdünnt und abgemahlen. Als Vernetzer fügt man 79 g 4,4'-Diamino-dimethyldicyclohexylmethan hinzu.

d) Herstellung einer WDD-Folie

Analog 5/d) wird mittels der Streichpaste 5/c) eine Folie hergestellt. WDD nach Lyssy: 3500 g/m$^2$ d bei einem Foliengewicht von 80 g/m$^2$.

**Patentansprüche**

**1.** Hitzehärtbare Beschichtungszusammensetzung enthaltend
A) ein durchschnittlich 2-4 Ketoximblockierte NCO-Gruppen aufweisendes Prepolymer mit einem durchschnittlichen Molekulargewicht von 500-15.000 auf Basis aliphatischer, cycloaliphatischer und aromatischer Polyisocyanate und einer oder mehreren Polyhydroxykomponenten mit 2 bis 4 Hydroxylgruppen, die 40 bis 100 Gew.-% Polyether und in der Summe 0-30 Gew.-% Ethylenoxid-Anteil enthalten, wobei bei Verwendung von mehreren Polyhydroxykomponenten der Ethylenoxid-Anteil in einer der Komponenten bis zu 70 Gew.-% betragen kann, und
B) einen Vernetzer der Formel

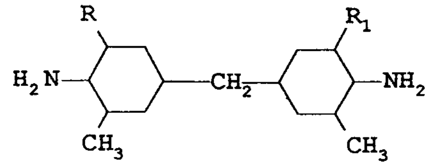

in der R oder R$^1$ H oder $C_1$-$C_4$-Alkyl bezeichnet, wobei das Äquivalentverhältnis von blockierten NCO-Gruppen in A) zu $NH_2$-Gruppen in B) zwischen 1,35:1 und 0,95:1 liegt, dadurch gekennzeichnet, daß mindestens eine der für die Herstellung des Prepolymers verwendeten Polyhydroxyverbindungen in stabiler Dispersion

C) ein Polyurethan und/oder einen Polyurethanharnstoff und/oder Polyharnstoff enthält, die keine freien NCO-Gruppen oder Hydroxylgruppen oder Aminogruppen mehr enthalten und aus aromatischen und/oder aliphatischen und/oder cycloaliphatischen Diisocyanaten, aliphatischen und/oder cycloaliphatischen Diaminen und/oder Diaminopolyethern (Molekulargewicht 500 bis 3000) und/oder Hydrazinhydrat und/oder Hydraziden und Dihydroxycarbonsäuren, Glykolen, Dihydroxypolyethern (Molekulargewicht 500 bis 3000) aufgebaut sind,

und die mindestens 5 Mol% Dihydroxycarbonsäuren und/oder Diaminoalkylsulfonsäuren und/oder Diaminocarbonsäuren und/oder deren Salze enthalten.

**2.** Zusammensetzung gemäß Anspruch 1, wobei die Polyhydroxylkomponenten der Gruppe A einen Ethylenoxid-Anteil von 5 bis 20 Gew.-% enthalten.

**3.** Zusammensetzung gemäß Ansprüchen 1 und 2, wobei bei Verwendung von mehreren Polyhydroxykomponenten der Gruppe A der Ethylenoxid-Anteil in einer der Komponenten bis zu 50 Gew.-% beträgt.

**4.** Zusammensetzung gemäß Ansprüchen 1 bis 3, dadurch gekennzeichnet, daß die stabil dispergierten Polyurethane und/oder Polyurethanharnstoffe C) aus Toluylendiisocyanaten und/oder Isophorondiisocyanat, Isophorondiaminen und/oder Hydrazinhydrat und/oder Diaminopolyethern und/oder Ethylenoxideinheiten und/oder Dimethylolpropionsäure und/oder Ethylendiaminethylsulfonsäure und/oder Glutaminsäure und/oder Lysin bzw. deren Alkali- und/oder Ammoniumsalzen erhalten werden.

**5.** Zusammensetzung gemäß den Ansprüchen 1 bis 4, dadurch gekennzeichnet, daß sie 4,4'-Diamino-3,3'-dimethyl-dicyclohexylmethan als Vernetzer enthält.

**6.** Zusammensetzung gemäß den Ansprüchen 1 bis 5, dadurch gekennzeichnet, daß das Verhältnis der stabil dispergierten Polyurethane und/oder Polyurethanharnstoffe C) zu den aus den Komponenten A und B hergestellten Polyurethanen, Polyharnstoffen bzw. Polyurethanharnstoffen 95:5 bis 10:90 beträgt.

**7.** Zusammensetzung gemäß den Ansprüchen 1 bis 6, dadurch gekennzeichnet, daß der Feststoffgehalt 70-100 Gew.-% beträgt.

**8.** Zusammensetzung gemäß den Ansprüchen 1 bis 7, dadurch gekennzeichnet, daß das Prepolymerisat auf einem Polyhydroxypolyether-Polyhydroxypolyester-Gemisch basiert.

**9.** Zusammensetzung gemäß den Ansprüchen 1 bis 9, dadurch gekennzeichnet, daß der Polyurethanharnstoff C) aus Toluylendiisocyanat-2,4/-2,6 (80:20), Hydrazinhydrat und Ethylendiamin-$\beta$-ethyl-sulfonsaurem Na hergestellt wird.

**10.** Verfahren zur Herstellung von wasserdampfdurchlässigen Beschichtungen auf flächigen Substraten, dadurch gekennzeichnet, daß man Zusammensetzungen gemäß den Ansprüchen 1 bis 10 verwendet.

**Claims**

**1.** A heat-curing coating composition containing

A) a prepolymer with an average molecular weight of 500 to 15,000 containing an average of 2 to 4 ketoxime-blocked NCO groups and being based on aliphatic, cycloaliphatic and aromatic polyisocyanates and one or more polyhydroxy components with 2 to 4 hydroxyl groups containing 40 to 100% by weight of polyethers and a total of 0 to 30% by weight of ethylene oxide; where several polyhydroxy components are used, the percentage ethylene oxide content in one of the components may be up to 70% by weight, and

B) a crosslinking agent corresponding to the following formula:

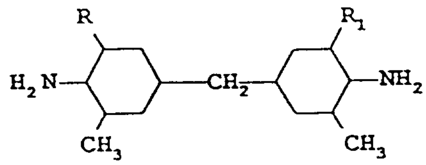

in which R or $R^1$ represents H or $C_{1-4}$ alkyl, the equivalent ratio of blocked NCO groups in A) to $NH_2$ groups in B) being from 1.35:1 to 0.95:1, characterized in that at least one of the polyhydroxy compounds used for the production of the prepolymer contains in the form of a stable dispersion

C) a polyurethane and/or a polyurethane urea and/or polyurea which no longer contain any free NCO groups or hydroxyl groups or amino groups and which are synthesized from aromatic and/or aliphatic and/or cycloaliphatic diisocyanates, aliphatic and/or cycloaliphatic diamines and/or diaminopolyethers (molecular weight 500 to 3,000) and/or hydrazine hydrate and/or hydrazides and dihydroxycarboxylic acids, glycols, dihydroxypolyethers (molecular weight 500 to 3,000), containing at least 5 mol-% of dihydroxycarboxylic acids and/or diaminoalkylsulfonic acids and/or diaminocarboxylic acids and/or salts thereof.

**2.** A composition as claimed in claim 1, characterized in that the polyhydroxy components of group A have a percentage ethylene oxide content of 5 to 20% by weight.

**3.** A composition as claimed in claims 1 and 2, characterized in that, where several polyhydroxy components of group A are used, the percentage ethylene oxide content in one of the components is up to 50% by weight.

**4.** A composition as claimed in claims 1 to 3, characterized in that the stably dispersed polyurethanes and/or polyurethane ureas C) are obtained from tolylene diisocyanates and/or isophorone diisocyanate, isophoronediamines and/or hydrazine hydrate and/or diaminopolyethers and/or ethylene oxide units and/or dimethylol propionic acid and/or ethylenediamine ethylsulfonic acid and/or glutamic acid and/or lysine or alkali metal and/or ammonium salts thereof.

**5.** A composition as claimed in claims 1 to 4, characterized in that it contains 4,4'-diamino-3,3'-dimethyl dicyclohexylmethane as crosslinking agent.

**6.** A composition as claimed in claims 1 to 5, characterized in that the ratio of the stably dispersed polyurethanes and/or polyurethane ureas C) to the polyurethanes, polyureas or polyurethane ureas prepared from components A and B is 95:5 to 10:90.

**7.** A composition as claimed in claims 1 to 6, characterized in that it has a solids content of 70 to 100% by weight.

**8.** A composition as claimed in claims 1 to 7, characterized in that the prepolymer is based on a polyhydroxypolyether/polyhydroxypolyester mixture.

**9.** A composition as claimed in claims 1 to 9, characterized in that the polyurethane urea C) is prepared from tolylene-2,4-diisocyanate/tolylene-2,6-diisocyanate (80:20), hydrazine hydrate and the sodium salt of ethylenediamine-$\beta$-ethylsulfonic acid.

**10.** A process for the production of coatings permeable to water vapour on flat substrates, characterized in that the compositions claimed in claims 1 to 10 are used.

## Revendications

**1.** Composition d'enduction thermodurcissable contenant

A) un prépolymère présentant en moyenne 2-4 groupes NCO bloqués par un groupe cétoxime, ayant un poids moléculaire moyen de 500-15.000, à base de polyisocyanates aliphatiques, cycloaliphatiques et aromatiques et d'un ou de plusieurs composants polyhydroxylés contenant de 2 à 4 groupes hydroxyle, qui contiennent de 40 à 100% en poids de polyéthers et, au total, 0-30% en poids d'une fraction d'oxyde d'éthylène, dans lequel, lorsqu'on utilise plusieurs composants polyhydroxylés, la fraction d'oxyde d'éthylène dans un des composants peut s'élever jusqu'à 70% en poids, et

B) un agent de réticulation répondant à la formule

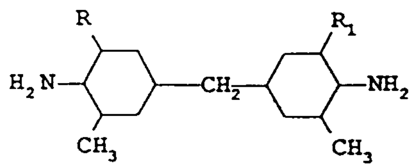

dans laquelle R ou $R^1$ représente H ou un groupe alkyle en $C_1$-$C_4$, dans lequel le rapport d'équivalent des groupes NCO bloqués dans A) aux groupes $NH_2$ dans B) se situe entre 1,35:1 et 0,95:1, caractérisée en ce qu'au moins un des composés polyhydroxylés utilisés pour la préparation du prépolymère contient, en dispersion stable,

C) un polyuréthanne et/ou une polyuréthanne-urée et/ou une polyurée qui ne contiennent plus de groupes NCO ou de groupes hydroxyle ou encore de groupes amino libres et qui sont constitués par des diisocyanates aromatiques et/ou aliphatiques et/ou cycloaliphatiques, par des diamines et/ou par des diaminopolyéthers aliphatiques et/ou cycloaliphatiques (poids moléculaire de 500 à 3000) et/ou par de l'hydrate d'hydrazine et/ou par des hydrazides et par des acides dihydroxycarboxyliques, par des glycols, par des dihydroxypolyéthers (poids moléculaire de 500 à 3.000), et qui contiennent au moins 5 moles % d'acides dihydroxycarboxyliques et/ou d'acides diaminoalkylsulfoniques et/ou d'acides diaminocarboxyliques et/ou de leurs sels.

**2.** Composition selon la revendication 1, dans laquelle les composants polyhydroxylés du groupe A contiennent une fraction d'oxyde d'éthylène de 5 à 20% en poids.

**3.** Composition selon les revendications 1 et 2, dans laquelle, lorsqu'on utilise plusieurs composants polyhydroxylés du groupe A, la fraction d'oxyde d'éthylène dans un des composants s'élève jusqu'à 50% en poids.

**4.** Composition selon les revendications 1 à 3, caractérisée en ce que les polyuréthannes et/ou les polyuréthanne-urées C) (dispersés de manière stable) sont obtenus à partir de toluylènediisocyanates et/ou d'isophoronediisocyanate, d'isophoronediamines et/ou d'hydrate d'hydrazine et/ou de diaminopolyéthers et/ou d'unités d'oxyde d'éthylène et/ou d'acide diméthylolpropionique et/ou d'acide éthylènediamineéthylsulfonique et/ou d'acide glutamique et/ou de lysine, respectivement de leurs sels de métaux alcalins et/ou d'ammonium.

**5.** Composition selon les revendications 1 à 4, caractérisée en ce qu'elle contient le 4,4'-diamino-3,3'-diméthyldicyclohexylméthane comme agent de réticulation.

**6.** Composition selon les revendications 1 à 5, caractérisée en ce que le rapport des polyuréthannes et/ou des polyuréthanne-urées C) dispersés de manière stable aux polyuréthannes, aux polyurées, respectivement aux polyuréthanne-urées préparés à partir des composants A et B s'élève de 95:5 à 10:90.

**7.** Composition selon les revendications 1 à 6, caractérisée en ce que la teneur en substance solide s'élève de 70 à 100% en poids.

**8.** Composition selon les revendications 1 à 7, caractérisée en ce que le prépolymère est à base d'un mélange de polyhydroxypolyéther-polyhydroxypolyester.

**9.** Composition selon les revendications 1 à 8, caractérisée en ce que la polyuréthanne-urée C) est préparée à partir du toluylènediisocyanate-2,4/-2,6 (80:20), d'hydrate d'hydrazine et de sel de sodium de l'acide éthylènediamine-$\beta$-éthylsulfonique.

**10.** Procédé pour la préparation d'enductions perméables à la vapeur d'eau sur des substrats planes, caractérisé en ce qu'on utilise des compositions selon les revendications 1 à 10.